# EUROPÄISCHE PATENTSCHRIFT

(11) **EP 1 472 110 B1**
(45) Veröffentlichungstag und Bekanntmachung des Hinweises auf die Patenterteilung: **02.11.2005**
(21) Anmeldenummer: 02776662.5
(22) Anmeldetag: 07.09.2002
(51) Int. Cl.: B60K 41/00, B60K 6/04

(54) **VERFAHREN ZUR EINSTELLUNG EINES SOLL-BETRIEBSZUSTANDES EINES HYBRIDANTRIEBES EINES FAHRZEUGES**
METHOD FOR SETTING A DESIRED OPERATING CONDITION OF A HYBRID DRIVE FOR A VEHICLE
PROCEDE POUR REGLER UN ETAT DE MARCHE NOMINAL POUR UN VEHICULE A ENTRAINEMENT HYBRIDE

(30) Priorität: 25.01.2002 DE 10203760
(43) Veröffentlichungstag der Anmeldung: 03.11.2004
(73) Patentinhaber: ROBERT BOSCH GMBH, 70442 Stuttgart (DE)
(72) Erfinder: EISENHARDT, Martin, 71272 Renningen (DE); HOETZER, Dieter, 71701 Schwieberdingen (DE); TUMBACK, Stefan, 70469 Stuttgart (DE)
(86) Internationale Anmeldenummer: PCT/DE2002/003343
(87) Internationale Veröffentlichungsnummer: WO 2003/062009

(56) Entgegenhaltungen:
- DE-A- 10 021 025
- DE-A- 10 110 965
- DE-A- 19 737 871
- FR-A- 2 783 763
- FR-A- 2 799 163
- US-A- 3 566 717

## Beschreibung

Die Erfindung betrifft ein Verfahren zur Einstellung eines Soll-Betriebszustandes eines Hybridantriebes eines Fahrzeuges, wobei der Hybridantrieb als Antriebsmaschinen eine Verbrennungskraftmaschine und zwei elektrische Maschinen umfasst und die Abtriebswellen der Antriebsmaschinen mit einem Antriebsstrang des Fahrzeuges wirkverbindbar sind.

### Stand der Technik

Hybridantriebe für Fahrzeuge sind bekannt. Bei den hier angesprochenen Hybridantrieben wird eine Verbrennungskraftmaschine mit zwei elektrischen Maschinen kombiniert, so dass mehrere Antriebsquellen für das Fahrzeug zur Verfügung stehen. Entsprechend vorgegebener Anforderungen durch einen Fahrzeugführer können hierbei die Antriebsquellen wahlweise ihre Antriebsmomente in einen Antriebsstrang des Fahrzeuges einspeisen. Hierdurch ergeben sich in an sich bekannter Weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist bekannt, diese über Getriebe, beispielsweise Planetengetriebe oder dergleichen, und Kupplungen miteinander wirkverbindbar anzuordnen.

Um einen Fahrerwunsch nach einer Antriebsleistung des Hybridantriebes optimal umsetzen zu können, ist eine koordinierte Ansteuerung der Antriebsmaschinen des Hybridantriebes erforderlich, die bekanntermaßen durch ein so genanntes Motorsteuergerät erfolgt. Die Ansteuerung der Antriebsmaschinen kann hierbei basierend auf einem durch das Motorsteuergerät zu bestimmenden Soll-Betriebszustand (optimaler Betriebspunkt) des Hybridantriebes erfolgen.

Es ist bekannt, zur Bestimmung des Soll-Betriebszustandes, ausgehend von einem einer Leistungsanforderung an den Hybridantrieb entsprechenden Wunschmoment eines Fahrzeugführers und einer momentanen elektrischen Leistungsanforderung eines Bordnetzes des Fahrzeuges die erforderliche Leistung der Verbrennungskraftmaschine, die erforderliche Drehzahl einer ersten elektrischen Maschine sowie das erforderliche Drehmoment einer zweiten elektrischen Maschine zu ermitteln. Diese ermittelten Größen werden als Sollgrößen an die Antriebsmaschinen gegeben. Hierbei ist nachteilig, dass das Drehmoment der zweiten elektrischen Maschine nicht hinreichend genau eingestellt werden kann. Dieses momentane Drehmoment der elektrischen Maschine muss daher beispielsweise auf Basis eines gemessenen Phasenstromes geschätzt werden. Aufgrund dieser ungenauen Schätzung ist die Einstellung des Drehmomentes der zweiten elektrischen Maschine fehlerbehaftet, so dass hierdurch auch das momentane Abtriebsmoment des Hybridantriebes und die momentane Leistung des Bordnetzes von.ihren Soll-Werten abweichen. Während die Abweichung des Abtriebsmomentes durch einen Fahrzeugführer ausgeglichen werden kann (Betätigung Fahrpedal oder dergleichen), kann die Abweichung der Leistung des Bordnetzes nur indirekt erfasst und geregelt werden. Hierbei wird die Bordnetzspannung durch einen übergeordneten Regler, der jedoch aufgrund einer hohen Kapazität einer eingesetzten Kraftfahrzeugbatterie nur langsam arbeiten kann, eingestellt. Diese Regelung der Bordnetzspannung führt zu Abweichungen der momentanen Bordnetzleistung, so dass eine Korrektur des Soll-Betriebspunktes des Hybridantriebes erforderlich wird.

Die FR 2 783 763 A zeigt die Merkmale des Oberbegriffes des Anspruches 1.

### Vorteile der Erfindung

Das erfindungsgemäße Verfahren mit den in Anspruch 1 genannten Merkmalen bietet demgegenüber den Vorteil, dass die Einstellung des Soll-Betriebspunktes des Hybridantriebes schneller und einfacher möglich wird. Dadurch, dass die Ansteuerung einer der elektrischen Maschinen spannungsgeregelt und die Ansteuerung der anderen elektrischen Maschine drehzahlgeregelt erfolgt, wird vorteilhaft möglich, die Regelung der Bordnetzspannung direkt in die Einstellung des Soll-Betriebspunktes des Hybridantriebes zu integrieren. Hierdurch kann eine schnelle und genaue Regelung der Bordnetzspannung erfolgen. Da die Bordnetzspannung direkt an die Leistung der Batterie gekoppelt ist, kann durch einfache Spannungsmessung an der elektrischen Maschine die Leistung der Batterie direkt ermittelt werden. Hieraus resultiert, dass durch eine Regelung der Spannung an der elektrischen Maschine eine einfache Regelung der Lade- beziehungsweise Entladeleistung der Batterie erfolgen kann. Dies wiederum bewirkt die schnelle und genaue Einstellung des Soll-Betriebspunktes des Hybridantriebes. Ferner ergibt sich hierdurch der Vorteil, dass eine Belastung der Kraftfahrzeugbatterie, durch die bisher übliche Regelung der Bordnetzspannung durch einen übergeordneten Regler, reduziert wird, so dass deren Standzeit verlängert wird.

Weitere bevorzugte Ausgestaltungen der Erfindung ergeben sich aus den in dem Unteranspruch 2 genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Ansicht eines Hybridantriebes eines Kraftfahrzeuges und
- Figur 2: in einem Blockschaltbild ein Verfahren zur Einstellung eines Soll-Betriebszustandes des Hybridantriebes.

### Beschreibung des Ausführungsbeispiels

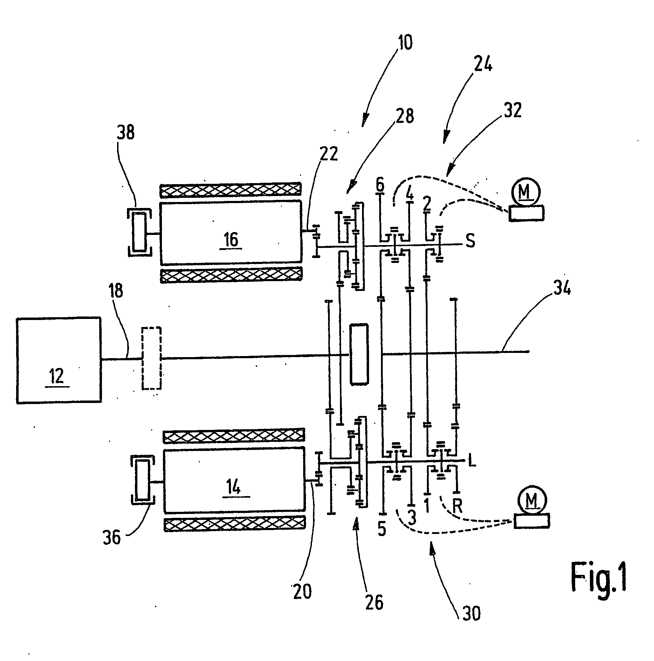

Figur 1 zeigt schematisch einen insgesamt mit 10 bezeichneten Hybridantrieb eines Kraftfahrzeuges. Der Hybridantrieb 10 umfasst eine Verbrennungskraftmaschine 12 sowie eine erste elektrische Maschine 14 und eine zweite elektrische Maschine 16. Eine Kurbelwelle 18 der Verbrennungskraftmaschine 12 und Antriebswellen 20 beziehungsweise 22 der elektrischen Maschinen 14 und 16 sind mit einer Getriebeanordnung 24 wirkverbunden. Hierbei ist die Antriebswelle 20 mit einem ersten Planetengetriebe 26 und die Antriebswelle 22 mit einem zweiten Planetengetriebe 28 verbunden. Ein Hohlrad des Planetengetriebes 26 ist mit einem Schaltgetriebe 30 und ein Hohlrad des Planetengetriebes 28 mit einem Schaltgetriebe 32 verbunden. Die Schaltgetriebe 30 und 32 wiederum sind mit einer Abtriebswelle 34 der Getriebeanordnung 24 wirkverbunden. Die Abtriebswelle 34 ist mit einer Antriebsachse des nicht dargestellten Kraftfahrzeuges wirkverbunden.

Aufbau und Wirkungsweise eines derartigen Hybridantriebes 10 sind allgemein bekannt, so dass im Rahmen der vorliegenden Beschreibung hierauf nicht näher eingegangen wird. Insbesondere kann durch gezielte Ansteuerung der Verbrennungskraftmaschine 12 und/oder der elektrischen Maschinen 14 und 16 von diesen ein unterschiedliches Antriebsmoment auf die Abtriebswelle 34 abgefordert werden. Somit lassen sich verschiedene Betriebsmodi des Hybridantriebes 10 einstellen. Die Schaltgetriebe 30 und 32 gestatten durch Betätigung eines Schaltgebers in bekannter Weise das Einlegen unterschiedlicher Gänge, die hier mit den Gängen 1, 2, 3, 4, 5 und 6 sowie einem Rückwärtsgang R bezeichnet sind. Die. elektrischen Maschinen 14 und 16 können auch jeweils im Generatorbetrieb betrieben werden und dienen beispielsweise der Bereitstellung einer Bordnetzspannung des Kraftfahrzeuges und dem Aufladen eines Akkumulators (Kraftfahrzeugbatterie). Den elektrischen Maschinen 14 und 16 sind jeweils Bremseinrichtungen 36 und 38 zugeordnet, mit denen Rotoren der elektrischen Maschinen 14 und 16 mechanisch gebremst werden können.

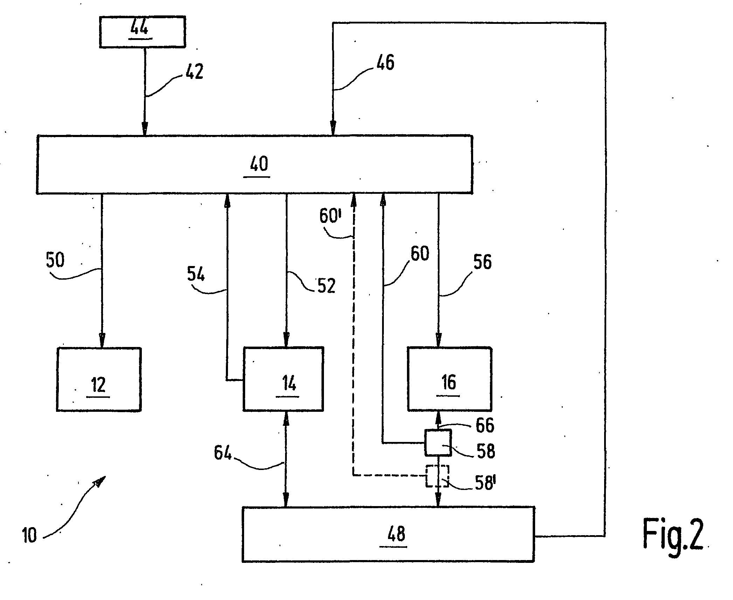

Figur 2 zeigt in einem Blockschaltbild einen Ausschnitt aus einem Steuergerät zur Ansteuerung des Hybridantriebes 10, wobei hier insbesondere auf das erfindungsgemäße Verfahren zur Einstellung eines Soll-Betriebszustandes des Hybridantriebes 10 eingegangen wird. Es ist klar, dass das Steuergerät daneben weitere Steuer- und/oder Regelfunktionen übernimmt.

Das Steuergerät umfasst einen so genannten Koordinator 40, zur Einstellung eines Soll-Betriebspunktes des Hybridantriebes 10. Hierzu erhält der Koordinator 40 ein Signal 42 von einem Geber 44, das eine momentane Leistungsanforderung, das heißt ein momentanes Abtriebsmoment, an der Antriebswelle 34 vorgibt. Der Geber 44 ist beispielsweise mit einem Fahrpedal, Bremspedal und/oder Fahrautomaten des Kraftfahrzeuges verbunden.

Ferner erhält der Koordinator 40 ein Signal 46 von einem Bordnetz 48 des Fahrzeuges, das der momentanen elektrischen Leistungsanforderung an das Bordnetz 48 entspricht. Ausgehend von den Signalen 42 und 46 und gegebenenfalls weiteren, in der Figur nicht dargestellten Signalen ermittelt der Koordinator 40 Sollgrößen für die Antriebsmaschinen des Hybridantriebes 10, also für die Verbrennungskraftmaschine 12 und die elektrischen Maschinen 14 und 16. Hierbei wird eine erste Sollgröße 50 an die Verbrennungskraftmaschine 12 gegeben, die einem Soll-Drehmoment der Verbrennungskraftmaschine 12 entspricht. Eine zweite Sollgröße 52 wird an die elektrische Maschine 14 gegeben, die einer Soll-Drehzahl der elektrischen Maschine 14 entspricht. Die elektrische Maschine 14 verfügt über einen Regler, der diese Soll-Drehzahl einstellt. Die elektrische Maschine 14 liefert ein Ist-Signal 54 an den Koordinator 40, das einer Ist-Drehzahl der elektrischen Maschine 14 entspricht. Der Koordinator 40 erkennt so, wenn der zulässige Betriebsbereich überschritten wird und kann eine entsprechende Korrektur bei der Ansteuerung der weiteren Aggregate vornehmen.

Durch das Einregeln der Soll-Drehzahl 52 an der elektrischen Maschine 14 wird gleichzeitig eine gewünschte Drehzahl des Verbrennungsmotors 12 eingestellt. Mit 64 ist der Strom bezeichnet, mit dem das Bordnetz 48 durch die elektrische Maschine 14 belastet beziehungsweise entlastet wird. Mit 66 ist der Strom bezeichnet, mit dem das Bordnetz 48 durch die elektrische Maschine 16 belastet beziehungsweise entlastet wird.

Eine weitere Sollgröße 56, beispielsweise die SollSpannung, wird der elektrischen Maschine 16 zugeführt. Die elektrische Maschine 16 stellt aufgrund der Sollgröße 56 die Spannung im Bordnetz ein.

Der Koordinator 40 wählt die Sollgrößen 50, 52 und 56 so, dass sowohl das erforderliche Abtriebsmoment an der Abtriebswelle 34 realisiert und die erforderliche Bordnetzleistung (Signal 46) bereitgestellt wird. Das erforderliche Abtriebsmoment wird dabei aus der Fahrzeuggeschwindigkeit und der momentanen Leistungsanforderung (Signal 42) errechnet. Wesentlich ist, dass die Bordnetzspannung über den Innenwiderstand einer Kraftfahrzeug-Batterie an die Lade- beziehungsweise Entladeleistung dieser Batterie gekoppelt ist.

Über ein Messsignal 58 wird die momentane Bordnetzspannung gemessen und dem Koordinator als Signal 60 zur Verfügung gestellt.

Anstelle des die Bordnetzspannung messenden Messgliedes 58 kann alternativ auch ein Messglied 58' vorgesehen sein, das kombiniert die Bordnetzspannung und einen Stromfluss im Spannungszwischenkreis zwischen Bordnetz 48 und elektrischer Maschine 16 misst. Hierdurch kann direkt die Bordnetzleistung ermittelt werden und als Signal 60' dem Koordinator 40 zur Verfügung gestellt werden.

Es wird deutlich, dass durch Integration der Regelung der Bordnetzspannung in den Koordinator 40 eine schnelle und genaue Regelung der Bordnetzspannung zur Einstellung des Soll-Betriebspunktes des Hybridantriebes 10 möglich ist. Eine momentgeführte Regelung der elektrischen Maschine 16 ist nicht mehr erforderlich, so dass die damit verbundenen Fehlerquellen beseitigt sind.

## Patentansprüche

1. Verfahren zur Einstellung eines Soll-Betriebszustandes eines Hybridantriebes eines Fahrzeuges, wobei der Hybridantrieb als Antriebsmaschinen eine Verbrennungskraftmaschine und wenigstens zwei elektrische Maschinen umfasst und die Abtriebswellen der Antriebsmaschine mit einem Antriebsstrang des Fahrzeuges wirkverbindbar sind, wobei in Abhängigkeit einer momentanen Leistungsanforderung (42) an den Hybridantrieb und einer momentanen elektrischen Leitungsanforderung (46) eines Bordnetzes des Fahrzeuges ein Soll-Betriebspunkt des Hybridantriebes eingestellt wird, indem die Drehzahlen und die Drehmomente der Antriebsmaschinen festgelegt werden, und wobei die Ansteuerung wenigstens einer der elektrischen Maschinen (16) spannungsgeregelt erfolgt, **dadurch gekennzeichnet, dass** die Ansteuerung der anderen elektrischen Maschine(n) (14) drehzahlgeregelt erfolgt und dass die Lade- beziehungsweise Entladeleistung einer Batterie des Fahrzeuges durch die Regelung der Bordnetzspannung eingestellt wird.

2. Verfahren nach Anspruch 1, **dadurch gekennzeichnet, dass** die Bordnetzleistung direkt durch Messung der Bordnetzspannung und eines Stromflusses im Spannungszwischenkreis zwischen Bordnetz (48) und elektrischer Maschine (16) ermittelt wird.

## Claims

1. Method for setting a desired operating state of a hybrid drive for a vehicle, wherein the hybrid drive comprises, as drive machines, an internal combustion engine and at least two electric machines, and the output shafts of the drive machine can be operatively connected to a drive train of the vehicle, wherein a desired operating point of the hybrid drive is set as a function of an instantaneous power request (42) to the hybrid drive and an instantaneous electrical power request (46) of an on-board power system of the vehicle by defining the rotational speeds and the torques of the drive machines, and wherein at least one of the electric machines (16) is actuated by means of voltage control, **characterized in that** the other electric machine or machines (14) is actuated by means of rotational speed control, and **in that** the charge capacity or discharge capacity of a battery of the vehicle is set by controlling the voltage of the on-board power system.

2. Method according to Claim 1, **characterized in that** the power of the on-board power system is determined directly by measuring the voltage of the on-board power system and a flow of current in the voltage intermediate-circuit between the on-board power system (48) and electric machine (16).

## Revendications

1. Procédé pour régler un état de fonctionnement nominal d'un entraînement hybride d'un véhicule, d'après lequel
- l'entraînement hybride comprend un moteur à combustion interne sous forme de moteur d'entraînement et au moins deux machines électriques et les arbres d'entraînement de sortie du moteur d'entraînement peuvent être liés activement à une ligne de transmission du véhicule,
- en fonction d'une demande momentanée de puissance (42) par l'entraînement hybride et en fonction d'une demande momentanée de puissance (46) électrique par un réseau de bord du véhicule, un point de fonctionnement nominal de l'entraînement hybride est réglé en déterminant les vitesses de rotation et les couples de rotation des moteurs d'entraînement, et
- la commande d'au moins une des machines électriques (16) est réglée en tension,
**caractérisé en ce que**
la commande de l'autre (ou des autres) machine(s) électrique(s) (14) est réglée en vitesse de rotation, et
la puissance de charge ou de décharge d'une batterie du véhicule est réglée en réglant la tension de réseau de bord.

2. Procédé selon la revendication 1,
**caractérisé en ce que**
la puissance de réseau de bord est directement déterminée en mesurant la tension de réseau de bord et un flux de courant dans le circuit intermédiaire de tension entre le réseau de bord (48) et la machine électrique (16).
